# FASCICULE DE BREVET EUROPEEN

(11) **EP 3 190 346 B1**
(45) Date de publication et mention de la délivrance du brevet: **25.12.2019**
(21) Numéro de dépôt: 16185604.2
(22) Date de dépôt: 25.08.2016
(51) Int. Cl.: F24F 7/06, F24F 11/00

(54) **DISPOSITIF DE CONNEXION RELAIS POUR INSTALLATION DE VENTILATION FORCEE, SYSTEME DE CONNEXION RELAIS LE COMPRENANT, ET INSTALLATION DE VENTILATION FORCEE EQUIPEE DE TELS SYSTEMES**
RELAIS-VERBINDUNGSVORRICHTUNG FÜR ZWANGSBELÜFTUNGSANLAGE, DIESE UMFASSENDES RELAIS-VERBINDUNGSSYSTEM UND ZWANGSBELÜFTUNGSANLAGE, DIE MIT DIESEN SYSTEMEN AUSGESTATTET IST
RELAY CONNECTION DEVICE FOR FORCED-VENTILATION INSTALLATION, RELAY CONNECTION SYSTEM COMPRISING SAME, AND FORCED-VENTILATION INSTALLATION PROVIDED WITH SUCH SYSTEMS

(30) Priorité: 05.01.2016 FR 1650061
(43) Date de publication de la demande: 12.07.2017
(73) Titulaire: Etudes et Constructions Electromecaniques, 87000 Limoges (FR)
(72) Inventeur: NORRIS, Chris, 87000 LIMOGES (FR)
(74) Mandataire: Cabinet Chaillot

(56) Documents cités:
- WO-A1-89/05947
- WO-A1-98/55769
- CN-A- 101 368 483
- CN-U- 202 228 101
- CN-U- 203 347 822

## Description

La présente invention concerne le domaine de la ventilation des tunnels, et porte en particulier sur un dispositif de connexion relais pour une installation de ventilation forcée, sur un système de connexion relais comprenant un tel dispositif et sur une installation de ventilation forcée équipée d'au moins un tel système.

Pour ventiler un tunnel, en cours d'excavation, il est courant de prélever de l'air à l'extérieur et de l'acheminer le long du tunnel par l'intermédiaire d'une ligne de ventilation allant jusqu'au front d'attaque et au début de laquelle est placé un ventilateur par lequel l'air extérieur est aspiré.

Dans le cas d'un tunnel particulièrement long et/ou de faible section, il est nécessaire de recourir à l'emploi d'un ou plusieurs ventilateurs dit relais qui sont interposés entre deux tronçons successifs de la ligne de ventilation qui est dans ce cas scindée en une série de tronçons de ligne, avec un espace ménagé entre la fin d'un tronçon et le ventilateur relais correspondant, de sorte que la fin d'un tronçon est à refoulement libre. En d'autres termes, chaque tronçon de ligne consiste généralement en une gaine au début de laquelle est placé un ventilateur aspirant dans la gaine l'air extérieur. On parle alors d'installation de ventilation forcée à relais.

Diviser de cette manière la ligne en plusieurs tronçons de ligne permet de réduire la pression statique dans chacun d'eux et notamment dans le premier tronçon de la ligne de ventilation. En effet, la pression statique en fin de gaine à refoulement libre est forcément égale à la pression atmosphérique au même endroit. Si l'on considère que la pression atmosphérique à l'aspiration d'un ventilateur est égale à celle au refoulement en fin du tronçon de ligne correspondant, l'élévation de pression statique de chaque ventilateur de la série de ventilateurs sera scindée de la même façon que la ligne. Le taux de fuites occasionné par des imperfections et l'usure de la ligne est fonction de la pression statique dans cette dernière : plus la pression statique est élevée, plus les fuites sont importantes. La réduction de la pression statique dans la ligne permet de ce fait de réduire les fuites et, par conséquent, le débit requis en début de ligne. Etant donné que la puissance absorbée est le produit de la pression totale (pression statique + pression dynamique) et du début volumique du ventilateur, cette réduction du débit représente nécessairement une réduction de la puissance absorbée du ventilateur et donc une économie d'énergie. La réduction de la pression et de la puissance du ventilateur en début de ligne, dans certains cas, peut entraîner l'économie d'un étage du ventilateur ou rendre possible une installation qui autrement nécessiterait trop de puissance électrique ou surpasserait la pression maximale admissible de la ligne.

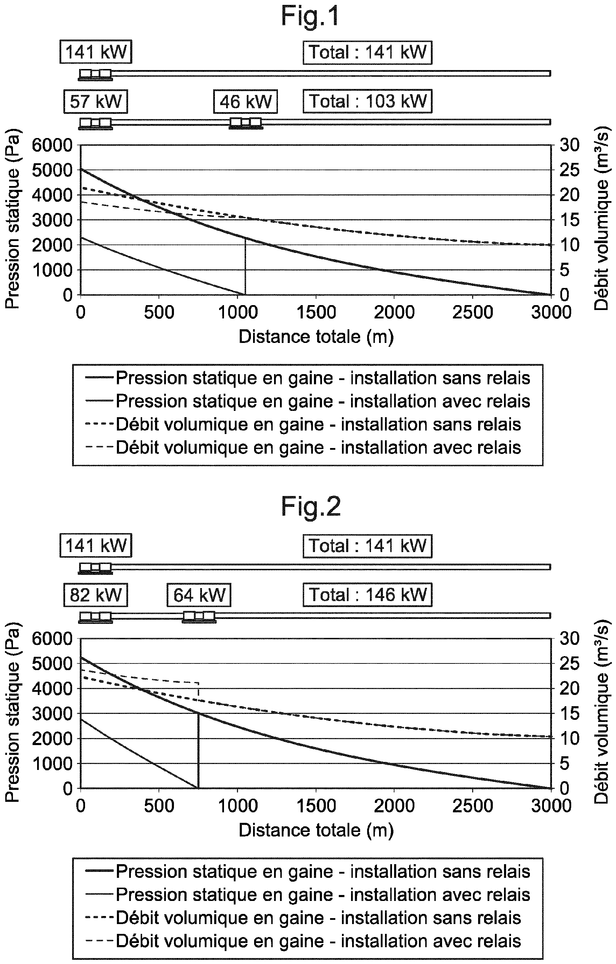

On a représenté sur la Figure 1 un graphique montrant l'évolution de la pression statique et du débit volumique dans une gaine en fonction de la distance totale de la gaine, et ceci pour une installation de ventilation forcée simple, à savoir une ligne composée d'une gaine avec un ventilateur en début de ligne, et pour une installation de ventilation forcée comprenant un ventilateur relais, et ainsi une ligne scindée en deux tronçons. Ces deux installations sont également représentées schématiquement sur la Figure 1.

On peut ainsi constater au vu de la Figure 1 que, théoriquement, dans l'exemple d'une ligne de 3 km, la puissance électrique totale consommée par les ventilateurs relais dans l'installation de ventilation forcée à relais est de 103 kW, tandis que celle consommée par l'unique ventilateur de l'installation de ventilation forcée simple est de 141 kW.

Toutefois, la ventilation forcée avec ventilateur(s) relais présente en pratique des inconvénients.

Le premier inconvénient résulte du fait qu'un espace est présent entre la fin d'un tronçon de ligne et le ventilateur relais qui le suit. Cela conduit à un risque de prise d'air vicié (poussières, pollution, etc.) environnant, qui serait alors injecté dans le flux d'air « frais », alors qu'il est indispensable que l'air aspiré par un ventilateur relais provienne à 100% de l'air fourni par le ventilateur en amont.

Pour résoudre ce problème, il est connu de recourir au « gavage » du ventilateur relais : le ventilateur relais est alimenté avec plus d'air que sa capacité propre, ce qui garantit un débordement d'air autour de l'aspiration du ventilateur relais et empêche l'air vicié du tunnel de s'introduire dans la prise d'air du ventilateur relais. Les recommandations de l'association Française des Tunnels et de l'Espace Souterrain (AFTES) préconisent un débit en fin de tronçon du ventilateur amont de 110 % à 120 % de la capacité du ventilateur relais. Or, comme indiqué ci-dessus, la puissance absorbée par un ventilateur est le produit de la pression totale et du débit volumique du ventilateur (au rendement aéraulique du ventilateur près). Ainsi, une augmentation du débit volumique conduira à une augmentation de l'énergie consommée par le ventilateur amont.

La Figure 2 est une vue analogue à la Figure 1, mais sur laquelle l'installation de ventilation forcée à relais est configurée pour un gavage du ventilateur relais. Les courbes associées à l'installation de ventilation forcée simple sont inchangées.

On constate au vu de la Figure 2 que la technique du gavage du ventilateur relais conduit à une puissance électrique totale consommée par les ventilateurs dans l'installation de ventilation forcée, de 146 kW, soit une puissance consommée supérieure à celle de l'unique ventilateur de l'installation de ventilation forcée simple, qui est de 141 kW.

Par conséquent, la technique du gavage conduit presque systématiquement à l'effet inverse à celui que l'on recherche, à savoir une économie d'énergie.

On mentionne ici la demande CN 101 368 483 A, qui décrit l'utilisation d'un dispositif de connexion relais selon le préambule de la revendication 1, lequel dispositif de connexion relais est installé entre deux tronçons de ligne, avec un surgavage des ventilateurs relais assuré par le ventilateur primaire.

Un second inconvénient de la ventilation forcée avec ventilateur(s) relais est qu'elle ne permet pas de prendre en compte l'évolution du chantier.

En effet, la sélection des ventilateurs est établie pour subvenir aux besoins du chantier en fin d'excavation, c'est-à-dire lorsque le tunnel, et donc la ligne, auront atteint leur longueur maximale. Le ou chaque ventilateur relais sera installé à l'emplacement prédéterminé dès que le tunnel aura atteint le point kilométrique correspondant. Dans un premier temps, la résistance induite par la gaine de faible longueur, c'est-à-dire celle derrière le ventilateur relais, sera moins important que celle prise en compte dans les calculs, ce qui implique que le ventilateur relais fonctionnera à une pression plus faible et, par conséquent, à un débit plus important (pour une vitesse de rotation identique). Le surplus d'air de 10 - 20% initialement prévu pour le gavage et fournit au ventilateur relais se verra donc réduit, voire dépassé par le débit du ventilateur relais. Outre le problème de la reprise d'air vicié du tunnel par le ventilateur relais, cette évolution du rapport entre l'air fourni en fin de tronçon de ligne par le ventilateur amont et l'air aspiré par le ventilateur relais conduit à une gestion hasardeuse de la ventilation primaire du chantier.

La présente invention vise à proposer une solution permettant de bénéficier en pratique de l'économie d'énergie que l'utilisation de ventilateur(s) relais doit théoriquement apportée, tout en garantissant la non-reprise d'air vicié du tunnel et en permettant de prendre en compte l'évolution de la longueur de la ligne de ventilation au cours du chantier.

La solution selon la présente invention repose sur l'interposition d'un ensemble conduit reliant de manière étanche la fin d'un tronçon de ligne de gaine au ventilateur relais qui le suit, associé à des moyens permettant la mesure d'au moins un paramètre de l'écoulement, en vue de commander le ventilateur relais pour que le débit de ce dernier permette d'obtenir des conditions d'écoulement recherchées.

La présente invention a ainsi pour objet un dispositif de connexion relais pour une installation de ventilation forcée à relais comprenant une ligne scindée en une série de tronçons de ligne formés par des gaines, deux tronçons de ligne successifs étant espacés l'un de l'autre, et dans laquelle un ventilateur, dit primaire, est prévu en début du premier tronçon de ligne de ladite série, et un ventilateur, dit relais, est prévu en début de chaque tronçon de ligne à partir du deuxième de ladite série, à distance de la fin du tronçon de ligne précédent, le dispositif de connexion relais comprenant un ensemble conduit formant un canal intérieur dont les deux extrémités sont ouvertes et munies de moyens de fixation configurés pour un raccordement étanche entre deux tronçons de ligne de façon à mettre en communication fluidique un tronçon de ligne, dit amont, et le ventilateur relais du tronçon de ligne suivant, le dispositif de connexion relais étant caractérisé par le fait que l'ensemble conduit est en outre muni de moyens de mesure d'au moins un paramètre de l'écoulement d'air à l'intérieur de ladite ligne, en vue de commander le fonctionnement dudit ventilateur relais, dont la vitesse est réglable en temps réel, pour obtenir à la fin du tronçon de ligne amont des conditions d'écoulement recherchées.

Les conditions d'écoulement recherchées pourront par exemple être que la pression statique à la fin d'un tronçon de ligne soit proche de la pression atmosphérique, de sorte que le tronçon de ligne en aval devient « invisible » pour le ventilateur en amont. Cette condition est considérée comme remplie si le débit du ventilateur relais est adapté au débit en fin de gaine. Dans un tel cas, et comme cela sera indiqué ci-après, ledit ou lesdits paramètres de l'écoulement d'air mesurés par lesdits moyens de mesure pourront être une pression et/ou une vitesse d'écoulement.

On peut bien entendu imaginer d'autres conditions d'écoulement recherchées, comme par exemple une pression négative à la fin du tronçon de ligne, ce qui permet de soulager le ventilateur en amont. Comme cela sera explicité ci-après, une telle condition pourra être prévue uniquement si les tronçons de ligne sont formés par des gaines rigides.

On peut ainsi souligner ici que la présente invention n'est pas limitée à des tronçons de ligne formés par des gaines souples ou des gaines rigides, mais peut être appliquée aux deux types de gaines.

L'ensemble conduit peut être formé par une unique pièce ou par plusieurs pièces raccordées de manière étanche les unes aux autres.

Les moyens de fixation de l'ensemble conduit peuvent être configurés pour un raccordement étanche à un ventilateur relais dans le cas où le ventilateur relais forme le début d'un tronçon de ligne, ou à une section de gaine dans laquelle le ventilateur relais n'est placé que dans la région d'extrémité aval d'un tronçon de ligne.

De préférence, lesdits moyens de mesure sont des moyens de mesure, d'une part, de la pression statique de l'air à l'intérieur du canal intérieur de l'ensemble conduit et, d'autre part, de la pression atmosphérique à l'extérieur de l'ensemble conduit. En d'autres termes, au moins un paramètre de l'écoulement d'air qui est mesuré est la pression.

Lesdits moyens de mesure peuvent être agencés pour mesurer la pression statique de l'air dans la région de l'extrémité munie de moyens de fixation configurés pour un raccordement étanche au ventilateur relais, de façon à mesurer la pression statique à l'aspiration du ventilateur relais.

Selon un mode de réalisation particulier, lesdits moyens de mesure comprennent un capteur de pression différentielle dont une première borne est reliée à des éléments de mesure de pression statique dans le canal intérieur de l'ensemble conduit et dont l'autre borne est à l'air libre, de préférence à la même altitude que l'axe du canal intérieur, pour mesurer la pression atmosphérique, lesdits éléments de mesure consistant, de préférence, en au moins quatre prises de pression reliées en parallèle à la première borne du capteur de pression différentielle.

Si la borne à l'air libre est à une altitude différente de celle de l'axe du canal intérieur, alors cette différence d'altitude est prise en compte dans les calculs des conditions d'écoulement à l'intérieur de l'ensemble conduit.

A l'évidence, il conviendra également de tenir compte de la géométrie du canal intérieur et de la position du ou des capteurs de pression lorsque l'on calcule les conditions d'écoulement à partir des mesures effectuées.

Bien entendu, selon la présente invention on peut en variante ou en plus mesurer la vitesse de l'écoulement d'air, comme autre paramètre, par exemple à l'aide d'anémomètres ou d'un champ de tubes de Pitot afin de réguler le dispositif.

La mesure de la pression est toutefois avantageuse en ce que la pression est constante sur une section du canal intérieur, alors que la vitesse ne l'est généralement pas. Par ailleurs, la mise en œuvre de capteurs de pression est plus simple. On optera donc de préférence pour une régulation sur la pression. On souligne ici que l'on pourra mesurer un ou des paramètres différents de celui ou de ceux utilisés pour définir les conditions d'écoulement recherchés, dans la mesure où l'on peut dans bien des cas arriver auxdites conditions d'écoulement par calcul à partir desdits paramètres, plutôt que par mesure directe.

De préférence, l'ensemble conduit est muni d'au moins une soupape de dépression configurée pour mettre le canal intérieur de l'ensemble conduit en communication avec l'air extérieur lorsque la pression à l'intérieur du canal intérieur est inférieure à un seuil de pression défini, notamment par rapport à la pression atmosphérique. Pour une installation de ventilation forcée à relais dont les tronçons de ligne sont formés par des gaines souples, le seuil de pression sera de préférence de 0 Pa, afin d'éviter un repli de la gaine, une telle pression inférieure à 0 Pa pouvant être occasionnée, par exemple, par une régulation tardive de la vitesse du ventilateur relais.

De préférence, l'ensemble conduit est muni d'au moins une soupape de surpression configurée pour mettre le canal intérieur de l'ensemble conduit en communication avec l'air extérieur lorsque la pression à l'intérieur du canal intérieur est supérieure à un seuil de pression défini, notamment par rapport à la pression atmosphérique. Le seuil de pression pourra être défini à une valeur seuil dont le dépassement pourrait conduire à une surcharge de pression au ventilateur amont.

Pour une installation de ventilation forcée à relais dont les tronçons de ligne sont cylindriques, l'ensemble conduit peut comprendre une partie centrale de section transversale carrée, à partir d'un premier côté de laquelle s'étend une première partie d'extrémité globalement cylindrique dont l'extrémité est munie desdits moyens de fixation, configurés pour un raccordement étanche à un tronçon de ligne muni d'un ventilateur relais, et à partir d'un second côté de laquelle s'étend une seconde partie d'extrémité, par exemple en s'élargissant en suivant globalement un tronc de cône, jusqu'à une région d'extrémité cylindrique munie desdits moyens de fixation, configurés pour un raccordement étanche à la fin d'un tronçon de ligne.

La présente invention a également pour objet un système de connexion relais pour une installation de ventilation forcée à relais comprenant une ligne scindée en une série de tronçons de ligne formés par des gaines, deux tronçons de ligne successifs étant espacés l'un de l'autre, et dans laquelle un ventilateur, dit primaire, est prévu en début du premier tronçon de ligne de ladite série, et un ventilateur, dit relais, dont la vitesse est réglable en temps réel, est prévu en début de chaque tronçon de ligne à partir du deuxième de ladite série, à distance de la fin du tronçon de ligne précédent, caractérisé par le fait qu'il comprend, pour le ou chaque ventilateur relais, un dispositif de connexion relais tel que défini ci-dessus, et un automate configuré pour déterminer des conditions d'écoulement d'air à la fin du tronçon de ligne amont auquel le dispositif de connexion relais est destiné à être relié, à partir des mesures prises par les moyens de mesure et pour commander en temps réel, par l'intermédiaire d'un variateur de vitesse, la vitesse du ventilateur relais pour obtenir à la fin du tronçon de ligne amont des conditions d'écoulement recherchées.

Lorsque le système de connexion relais comprend un dispositif de connexion relais dont les moyens de mesure sont des moyens de mesure, d'une part, de la pression statique de l'air à l'intérieur du canal intérieur de l'ensemble conduit et, d'autre part, de la pression atmosphérique à l'extérieur de l'ensemble conduit, l'automate est, de préférence, configuré pour que la pression statique à la fin du tronçon de ligne en amont du ventilateur relais soit à une valeur cible, notamment à une valeur cible de 0 Pa ou légèrement supérieure à 0 Pa.

La présente invention a également pour objet une installation de ventilation forcée comprenant une ligne scindée en une série de tronçons de ligne formés par des gaines, deux tronçons de ligne successifs étant espacés l'un de l'autre, et dans laquelle un ventilateur, dit primaire, est prévu en début du premier tronçon de ligne de ladite série, et un ventilateur, dit relais, dont la vitesse est réglable en temps réel, est prévu en début de chaque tronçon de ligne à partir du deuxième de ladite série, à distance de la fin du tronçon de ligne précédent, caractérisé par le fait qu'elle est équipée, entre deux tronçons de ligne successifs, d'un système de connexion relais tel que défini ci-dessus, dont le dispositif de connexion relais est raccordé de manière étanche entre lesdits deux tronçons de ligne successifs.

Pour mieux illustrer l'objet de la présente invention, on va en décrire ci-après, à titre indicatif et non limitatif, un mode de réalisation particulier avec référence au dessin annexé.

Sur ce dessin :
- la Figure 1 un graphique montrant l'évolution de la pression statique et du débit volumique dans une gaine en fonction de la distance totale de la gaine, et ceci pour une installation de ventilation simple et pour une installation de ventilation forcée avec un ventilateur relais ;
- la Figure 2 est un graphique analogue à celui de la Figure 1, pour une installation de ventilation simple et pour une installation de ventilation forcée avec un ventilateur relais et gavage de ce dernier ;
- la Figure 3 est un schéma de principe d'une partie de l'installation de ventilation selon un mode de réalisation particulier de la présente invention ;
- la Figure 4 est un schéma de principe d'une variante de la Figure 3 ;
- les Figures 5, 6 et 7 sont des vues respectivement en perspective, de dessus et en bout, du dispositif de connexion relais de l'installation de ventilation de la Figure 4 ; et
- la Figure 8 est une vue en coupe selon la ligne VII-VII de la Figure 7.

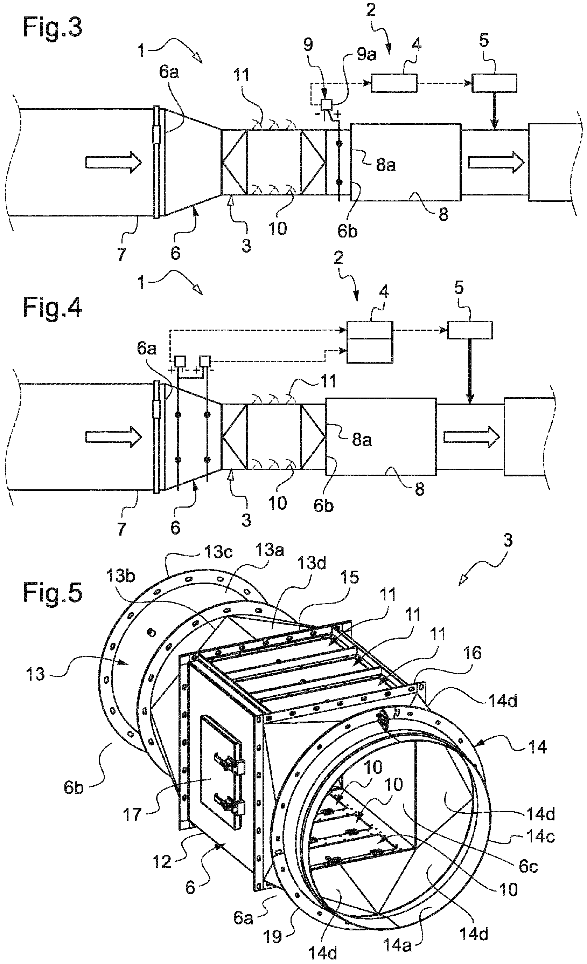

Si l'on se réfère tout d'abord à la Figure 3, on peut voir que l'on y a représenté un schéma de principe d'une partie d'une installation de ventilation forcée 1 selon un mode de réalisation particulier de la présente invention, en particulier la région entre la fin du premier tronçon de ligne et le début du tronçon suivant.

L'installation 1 diffère d'une installation classique de ventilation forcée avec ventilateur relais en ce qu'elle est équipée d'un système de connexion relais 2 comprenant un dispositif de connexion relais 3 et un automate 4. Est également prévu un variateur de vitesse 5, déjà utilisé dans les installations classiques.

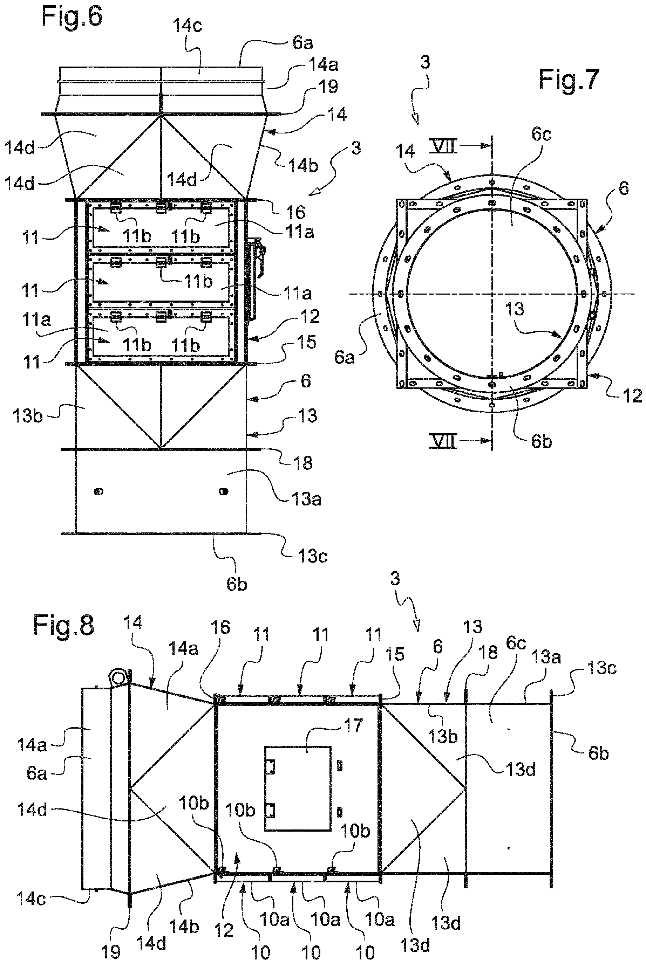

Comme cela sera décrit plus en détail en liaison avec les Figures 5 à 8, le dispositif de connexion relais 3 comprend un ensemble conduit 6 ayant une première extrémité 6a qui est raccordée de manière étanche à l'extrémité de la gaine 7 formant le premier tronçon de ligne et une seconde extrémité 6b qui est raccordée de manière étanche à un ventilateur relais 8, plus précisément à sa prise d'air 8a. Le ventilateur relais 8 est réglable en vitesse par le variateur de vitesse 5 et sa sortie est reliée à une gaine 7 formant un autre tronçon de ligne.

Le canal intérieur, référencé 6c sur les Figures 5, 7 et 8, met ainsi en communication de fluide la gaine 7 et le ventilateur relais 8, de sorte que la totalité de l'air par le ventilateur de début de ligne (non représenté), à savoir celui en début de la gaine 7, est fourni au ventilateur relais 8.

Sont prévus des moyens 9 de mesure de la pression statique de l'air dans le canal intérieur 6c, dans la région de la seconde extrémité 6b, et de mesure de la pression atmosphérique au voisinage de ladite seconde extrémité 6b. Les moyens 9 de mesure sont ici formés par quatre prises de pression normalisées (norme ISO 5801), pour la mesure de la pression statique dans le canal intérieur 6c, reliées en parallèle à une borne d'un capteur de pression différentielle 9a dont la seconde borne reste à l'air libre afin de mesurer la pression atmosphérique.

Le capteur de pression différentielle 9a est relié à l'automate 4 pour qu'une sortie analogique (4-20 mA ou autre) dudit capteur 9a permette l'acquisition, par l'automate 4, de la différence de pression mesurée entre la pression statique dans le canal intérieur 6c et la pression atmosphérique.

L'automate 4 est configuré pour envoyer des consignes au variateur de vitesse 5 pour que ce dernier puisse faire varier la vitesse du ventilateur relais 8, en l'augmentant ou en la diminuant, pour que la différence de pression mesurée entre la pression statique à l'intérieur du dispositif et la pression atmosphérique à l'extérieur du dispositif soit quasi-nulle, ce qui implique que le débit du ventilateur relais 8 soit sensiblement égal au débit de l'air en fin de gaine 7.

En effet, si le débit d'aspiration du ventilateur relais est inférieur au débit dans la gaine 7 en amont, la pression dans ladite gaine 7 augmentera, ce qui entraînera une puissance absorbée excessive pour le ventilateur amont (ici de début de ligne, puisque l'installation 1 ne comporte qu'un seul ventilateur relais 8). Si le débit d'aspiration du ventilateur relais 8 dépasse celui de la gaine 7, cette dernière risque de se retrouver en dépression par rapport à la pression atmosphérique et se rétractera.

De préférence, l'automate 4 est configuré pour maintenir une pression légèrement positive à l'intérieur de la gaine 7, afin que cette dernière reste dilatée. Le diamètre de la gaine 7 étant normalement plus grand que le diamètre nominal du ventilateur relais 8, et la pression statique immédiatement en amont du ventilateur relais 8 étant normalement négative, il suffit de maintenir la pression statique à l'aspiration du ventilateur relais 8 autour de 0 Pa, pour que la pression statique en fin de gaine 7 soit positive. Dans le mode de réalisation représenté, elle sera égale à la différence de pression dynamique entre la gaine 7 et le ventilateur relais 8, plus la perte de charge due à la partie conique du dispositif de connexion relais 3.

L'ensemble du système de connexion relais 2 est autonome. En effet, étant donné qu'il permet d'adapter automatiquement la vitesse du ventilateur relais 8 au débit fourni par le ventilateur de début de ligne, le débit fourni à la fin de la ligne, donc au front d'attaque dans le cas d'excavation en cours, peut être déterminé dès le ventilateur de début de ligne, ce qui permet de tenir compte, au cours du chantier, de l'augmentation de la longueur de gaine derrière le ventilateur relais 8.

Par ailleurs, puisque la totalité du débit fourni par le ventilateur de début de ligne est relayé vers le front d'attaque sans que de l'air vicié ne soit repris par le ventilateur relais 8, les tracés de débit et de pression en gaine, ainsi que les puissances absorbées par les ventilateurs, seront proches de ceux, théoriques, de la Figure 1.

Le système de connexion relais 2 selon la présente invention permet donc d'obtenir une économie d'énergie sans risque de reprise d'air vicié, tout en permettant de gérer la ventilation en fonction de l'évolution du chantier.

Le dispositif de connexion relais 3 est également équipé de soupapes de dépression 10 et de soupapes de surpression 11, toutes deux configurées pour mettre le canal intérieur 6c en communication avec l'extérieur en cas de disfonctionnement transitoire ou permanent du système de régulation du débit du ventilateur relais.

Les soupapes de dépression 10 ont pour fonction de protéger l'ensemble conduit 6 contre un effondrement sur lui-même dans le cas où une réduction du débit en fin de gaine 7 particulièrement rapide ne pourrait pas être corrigée de manière suffisante par la diminution de la vitesse du ventilateur relais 8.

Les soupapes de dépression 10 sont donc configurées pour s'ouvrir dans le cas où la pression en gaine amont est négative par rapport à la pression atmosphérique.

Les soupapes de surpression 11 ont pour fonction de protéger le ventilateur de début de ligne dans le cas d'un arrêt d'urgence ou d'une panne du ventilateur relais 8. En effet, dans un tel cas, le ventilateur de début de ligne se retrouverait relié à une longueur de gaine allant jusqu'au front d'attaque, ce qui pourrait bien représenter une résistance trop importante pour le fonctionnement sans risque du ventilateur de début de ligne.

Les soupapes de surpression 11 sont donc configurées pour s'ouvrir dans le cas où la pression statique dépasse une valeur de pression statique maximale à l'intérieur de l'ensemble conduit 6. La pression d'ouverture des soupapes doit être prise en compte lors du dimensionnement du ventilateur amont.

Ainsi, en cas d'arrêt ou de panne du ventilateur relais 8, la pression dans l'ensemble conduit 6 augmentera jusqu'à l'ouverture des soupapes de surpression 11, limitant ainsi la pression statique au ventilateur de début de ligne à la résistance de la gaine 7 du premier tronçon, plus la pression d'ouverture des soupapes de surpression 11. La ventilation du premier tronçon du tunnel sera assurée.

Si l'on se réfère maintenant à la Figure 4, on peut voir que l'on y a représenté une variante du mode de réalisation décrit ci-dessus, la seule différence résidant dans le fait que les moyens 9 de mesure sont ici placés sur la pièce de connexion conique (seconde partie d'extrémité 14 sur les Figures 5 à 8) de l'ensemble conduit 6, avec deux capteurs de pression différentielle mesurant deux deltas de pression et deux rangées de prises de pression situées sur deux sections circulaires de cette pièce de connexion conique. Le premier capteur, sur la gauche sur la Figure 4, sert à mesurer la différence de pression (premier delta de pression) entre les prises de mesure de la première rangée de prises de mesure et la pression atmosphérique, cette différence de pression servant à la régulation par l'automate. Le second capteur, sur la droite, sert à mesurer un second delta de pression entre les prises de mesure des deux sections circulaires respectives. Ce second delta de pression représente une différence de pression dynamique due à la variation de vitesse entre les deux sections qui permet de calculer et d'afficher le débit du ventilateur relais (l'affichage débit est schématisé par le rectangle sur laquelle pointe la flèche partant du second capteur, l'autre rectangle schématisant l'automate).

On va maintenant décrire plus en détail un mode de réalisation spécifique du dispositif de connexion relais 3, avec référence aux Figures 5 à 8.

L'ensemble conduit 6 comprend une partie centrale 12 à partir de deux côtés de laquelle s'étendent une première partie d'extrémité 13 et une seconde partie d'extrémité 14.

La partie centrale 12 est formée par un tube de section transversale carrée s'achevant, à chacune de ses deux extrémités, en une bride périphérique par laquelle il est fixé de manière étanche, par boulonnage, à des brides périphériques correspondantes des première 13 et seconde 14 parties d'extrémité, respectivement en 15 et 16.

Les soupapes de dépression 10 et les soupapes de surpression 11 sont de type à commande par gravité et sont prévues sur les faces supérieure et inférieure de la partie centrale 12 et sont de type à charnière : elles se présentent sous forme de lamelles pivotantes 10a, 11a configurées pour pivoter autour de charnières 10b, 11b entre une première position, dans laquelle les lamelles pivotantes ferment chacune de manière étanche l'ouverture ménagée dans la partie centrale 12 et dans laquelle elle est montée, et une seconde position dans laquelle elles ont été amenées à pivoter, vers l'intérieur de la partie centrale 12 pour les soupapes de dépression 10, vers l'extérieur pour les soupapes de surpression 11, pour laisser ladite ouverture dégagée et ainsi mettre le canal intérieur 6c en communication avec l'extérieur.

La commande du pivotement des soupapes de dépression 10 et des soupapes de surpression 11 se fait par l'équilibre entre la force de gravité et la pression sur les surfaces des volets.

Une porte capot 17 de type à charnières est prévue sur un troisième côté de la partie centrale 12, pour permettre un accès à l'intérieur de l'ensemble conduit 6 en cas de besoin.

La première partie d'extrémité 13 est formée par une chambre piézométrique 13a et une pièce intermédiaire 13b.

La chambre piézométrique 13a est une pièce tubulaire cylindrique dont le diamètre intérieur est égal au diamètre intérieur du ventilateur relais et présentant à une première extrémité une bride 13c constituant un moyen de fixation à la prise d'air du ventilateur relais 8, et munie ainsi d'ouvertures pour boulonnage, et à sa seconde extrémité une bride par laquelle elle est fixée de manière étanche, par boulonnage, en 18, à une bride formée à une première extrémité de la pièce intermédiaire 13b.

La pièce intermédiaire 13b est une pièce tubulaire dont la paroi intérieure est formée par des sections triangulaires 13d permettant de relier de manière progressive la section cylindrique de la pièce d'extrémité 13a à la section carrée de la partie centrale 12a. La seconde extrémité de la pièce intermédiaire 13b est fixée de manière étanche à la partie centrale 12a par boulonnage de brides, en 15.

La seconde partie d'extrémité 14 est également formée par une pièce d'extrémité 14a et une pièce intermédiaire 14b.

La pièce d'extrémité 14a est un tube court cylindrique dont une région de première extrémité 14c est destinée à être introduite dans la fin de la gaine 7, pour y être fixé, et dont le diamètre est donc normalement plus grand que la longueur d'un côté de la partie centrale 12a, bien que cela ne soit pas nécessaire. L'autre extrémité de la pièce d'extrémité 14a est fixée de manière étanche, par boulonnage de brides, en 19, à une extrémité de la pièce intermédiaire 14b.

La pièce intermédiaire 14b est une pièce tubulaire dont l'autre extrémité est fixée de manière étanche, par boulonnages de brides, en 16, à la partie centrale 12a, et dont la paroi intérieure est formée par des sections triangulaires 13d s'évasant vers l'extérieur à partir de la partie centrale 12a, de façon à relier de manière progressive la section carrée de la partie centrale 12a à la section cylindrique de la pièce d'extrémité 14a, tout en tenant compte de l'augmentation des dimension du canal intérieur 6c. L'intérieur de la pièce intermédiaire 14b suit donc globalement la forme d'un tronc de cône.

L'ensemble conduit 6 ainsi définit permet de raccorder de manière étanche la fin de la gaine 7 au ventilateur relais 8, tout en tenant compte du fait que le diamètre de la gaine 7 est supérieur au diamètre nominal du ventilateur relais 8, sans perturber de manière excessive l'écoulement d'air en sortie de la gaine 7.

Les prises de pression statique seront placées dans la partie d'extrémité 13a de la première partie d'extrémité 13, donc côté ventilateur relais 8.

Il est bien entendu que le mode de réalisation ci-dessus de la présente invention a été donné à titre indicatif et non limitatif et que des modifications pourront y être apportées sans que l'on s'écarte pour autant du cadre de la présente invention telle que définie dans les revendications.

## Revendications

1. Dispositif de connexion relais (3) pour une installation de ventilation forcée à relais (1) comprenant une ligne scindée en une série de tronçons de ligne (7) formés par des gaines, deux tronçons de ligne (7) successifs étant espacés l'un de l'autre, et dans laquelle un ventilateur, dit primaire, est prévu en début du premier tronçon de ligne (7) de ladite série, et un ventilateur, dit relais (8), est prévu en début de chaque tronçon de ligne (7) à partir du deuxième de ladite série, à distance de la fin du tronçon de ligne (7) précédent, le dispositif de connexion relais (3) comprenant un ensemble conduit (6) formant un canal intérieur (6c) dont les deux extrémités (6a, 6b) sont ouvertes et munies de moyens de fixation (13c, 14c) configurés pour un raccordement étanche entre deux tronçons de ligne (7) de façon à mettre en communication fluidique un tronçon de ligne (7), dit amont, et le ventilateur relais (8) du tronçon de ligne (7) suivant, le dispositif de connexion relais (3) étant **caractérisé par le fait que** l'ensemble conduit (6) est en outre muni de moyens (9) de mesure d'au moins un paramètre de l'écoulement d'air à l'intérieur de ladite ligne, en vue de commander le fonctionnement dudit ventilateur relais (8), dont la vitesse est réglable en temps réel, pour obtenir à la fin du tronçon de ligne (7) amont des conditions d'écoulement recherchées.

2. Dispositif de connexion relais (3) selon la revendication 1, **caractérisé par le fait que** lesdits moyens de mesure (9) sont des moyens de mesure, d'une part, de la pression statique de l'air à l'intérieur du canal intérieur (6c) de l'ensemble conduit (6) et, d'autre part, de la pression atmosphérique à l'extérieur de l'ensemble conduit (6) .

3. Dispositif de connexion relais (3) selon la revendication 2, **caractérisé par le fait que** lesdits moyens de mesure (9) comprennent un capteur de pression différentielle (9a) dont une première borne est reliée à des éléments de mesure de pression statique dans le canal intérieur (6c) de l'ensemble conduit (6) et dont l'autre borne est à l'air libre, de préférence à la même altitude que l'axe du canal intérieur (6c), pour mesurer la pression atmosphérique, lesdits éléments de mesure consistant, de préférence, en au moins quatre prises de pression reliées en parallèle à la première borne du capteur de pression différentielle (9a).

4. Dispositif de connexion relais (3) selon l'une des revendications 1 à 3, **caractérisé par le fait que** l'ensemble conduit (6) est muni d'au moins une soupape de dépression (10) configurée pour mettre le canal intérieur (6c) de l'ensemble conduit (6) en communication avec l'air extérieur lorsque la pression à l'intérieur du canal intérieur (6) est inférieure à un seuil de pression défini.

5. Dispositif de connexion relais (3) selon l'une des revendications 1 à 4, **caractérisé par le fait que** l'ensemble conduit (6) est muni d'au moins une soupape de surpression (11) configurée pour mettre le canal intérieur (6c) de l'ensemble conduit (6) en communication avec l'air extérieur lorsque la pression à l'intérieur du canal intérieur (6) est supérieure à un seuil de pression défini.

6. Dispositif de connexion relais (3) selon l'une des revendications 1 à 5, pour une installation de ventilation forcée à relais (1) dont les tronçons de ligne (7) sont cylindriques, **caractérisé par le fait que** l'ensemble conduit (6) comprend une partie centrale (12a) de section transversale carrée, à partir d'un premier côté de laquelle s'étend une première partie d'extrémité (13) globalement cylindrique dont l'extrémité est munie desdits moyens de fixation (13c), configurés pour un raccordement étanche à un tronçon de ligne (7) muni d'un ventilateur relais (8), et à partir d'un second côté de laquelle s'étend une seconde partie d'extrémité (14), par exemple en s'élargissant en suivant globalement un tronc de cône, jusqu'à une région d'extrémité cylindrique (14a) munie desdits moyens de fixation (14c), configurés pour un raccordement étanche à la fin d'un tronçon de ligne (7).

7. Système de connexion relais (2) pour une installation de ventilation forcée à relais (1) comprenant une ligne scindée en une série de tronçons de ligne (7) formés par des gaines, deux tronçons de ligne (7) successifs étant espacés l'un de l'autre, et dans laquelle un ventilateur, dit primaire, est prévu en début du premier tronçon de ligne (7) de ladite série, et un ventilateur (8), dit relais, dont la vitesse est réglable en temps réel, est prévu en début de chaque tronçon de ligne (7) à partir du deuxième de ladite série, à distance de la fin du tronçon de ligne (7) précédent, **caractérisé par le fait qu'**il comprend, pour le ou chaque ventilateur relais (8), un dispositif de connexion relais (3) tel que défini à l'une des revendications 1 à 6, et un automate (4) configuré pour déterminer des conditions d'écoulement d'air à la fin du tronçon de ligne (7) amont auquel le dispositif de connexion relais (3) est destiné à être relié, à partir des mesures prises par les moyens de mesure (9) et pour commander en temps réel, par l'intermédiaire d'un variateur de vitesse (5), la vitesse du ventilateur relais (8) pour obtenir à la fin du tronçon de ligne (7) amont des conditions d'écoulement recherchées.

8. Système de connexion relais (2) selon la revendication 7, comprenant un dispositif de connexion relais (3) dont les moyens de mesure (9) sont des moyens de mesure, d'une part, de la pression statique de l'air à l'intérieur du canal intérieur (6c) de l'ensemble conduit (6) et, d'autre part, de la pression atmosphérique à l'extérieur de l'ensemble conduit (6), **caractérisé par le fait que** l'automate (4) est configuré pour que la pression statique à la fin du tronçon de ligne (7) en amont du ventilateur relais (8) soit à une valeur cible, notamment à une valeur cible de 0 Pa ou légèrement supérieure à 0 Pa.

9. Installation de ventilation forcée (1) comprenant une ligne scindée en une série de tronçons de ligne (7) formés par des gaines, deux tronçons de ligne (7) successifs étant espacés l'un de l'autre, et dans laquelle un ventilateur, dit primaire, est prévu en début du premier tronçon de ligne (7) de ladite série, et un ventilateur (8), dit relais, dont la vitesse est réglable en temps réel, est prévu en début de chaque tronçon de ligne (7) à partir du deuxième de ladite série, à distance de la fin du tronçon de ligne (7) précédent, **caractérisé par le fait qu'**elle est équipée, entre deux tronçons de ligne (7) successifs, d'un système de connexion relais (2) tel que défini à l'une des revendications 7 et 8, dont le dispositif de connexion relais (3) est raccordé de manière étanche entre lesdits deux tronçons de ligne (7) successifs.

## Patentansprüche

1. Relais-Verbindungsvorrichtung (3) für eine Relais-Zwangsbelüftungsanlage (1), umfassend eine in eine Reihe von Leitungsabschnitten (7), gebildet von Mäntel, unterteilte Leitung, wobei zwei aufeinanderfolgende Leitungsabschnitte (7) voneinander beabstandet sind, und wobei ein Lüfter, bezeichnet als primär, am Anfang des ersten Leitungsabschnitts (7) der Reihe vorgesehen ist, und ein Lüfter, bezeichnet als Relais (8), am Anfang jedes Leitungsabschnitts (7) ab dem zweiten der Reihe vorgesehen ist, beabstandet vom Ende des vorangehenden Leitungsabschnitts (7), wobei die Relais-Verbindungsvorrichtung (3) eine Rohreinheit (6) umfasst, die einen Innenkanal (6c) bildet, deren zwei Enden (6a, 6b) offen sind und mit Befestigungsmitteln (13c, 14c) ausgestattet sind, die für einen dichten Anschluss zwischen zwei Leitungsabschnitten (7) derart konfiguriert sind, dass ein Leitungsabschnitt (7), bezeichnet als vorgelagert, und der Relais-Lüfter (8) des nächsten Leitungsabschnitts (7) in Fluidkommunikation versetzt werden, wobei die Relais-Verbindungsvorrichtung (3) **dadurch gekennzeichnet ist, dass** die Rohreinheit (6) ferner mit Messmitteln (9) mindestens eines Parameters der Luftströmung im Inneren der Leitung ausgestattet ist, um den Betrieb des Relais-Lüfters (8), dessen Geschwindigkeit in Echtzeit einstellbar ist, zu steuern, um am Ende des vorgelagerten Leitungsabschnitts (7) gewünschte Strömungsbedingungen zu erhalten.

2. Relais-Verbindungsvorrichtung (3) nach Anspruch 1, **dadurch gekennzeichnet, dass** die Messmittel (9) zum einen Messmittel des statischen Drucks der Luft im Inneren des Innenkanals (6c) der Rohreinheit (6) und zum anderen des atmosphärischen Drucks außerhalb der Rohreinheit (6) sind.

3. Relais-Verbindungsvorrichtung (3) nach Anspruch 2, **dadurch gekennzeichnet, dass** die Messmittel (9) einen Differentialdrucksensor (9a) umfassen, von dem eine erste Klemme mit Messelementen des statischen Drucks im Innenkanal (6c) der Rohreinheit (6) verbunden ist und dessen andere Klemme in der freien Luft ist, vorzugsweise in derselben Höhe wie die Achse des Innenkanals (6c), um den atmosphärischen Druck zu messen, wobei die Messelemente vorzugsweise aus mindestens vier Druckaufnehmern bestehen, die parallel mit der ersten Klemme des Differentialdrucksensors (9a) verbunden sind.

4. Relais-Verbindungsvorrichtung (3) nach einem der Ansprüche 1 bis 3, **dadurch gekennzeichnet, dass** die Rohreinheit (6) mit mindestens einem Unterdruckventil (10) ausgestattet ist, das konfiguriert ist, um den Innenkanal (6c) der Rohreinheit (6) mit der Außenluft in Kommunikation zu versetzen, wenn der Druck im Inneren des Innenkanals (6) niedriger als ein festgelegter Druckgrenzwert ist.

5. Relais-Verbindungsvorrichtung (3) nach einem der Ansprüche 1 bis 4, **dadurch gekennzeichnet, dass** die Rohreinheit (6) mit mindestens einem Überdruckventil (11) ausgestattet ist, das konfiguriert ist, um in Innenkanal (6c) der Rohreinheit (6) mit der Außenluft in Kommunikation zu versetzen, wenn der Druck im Inneren des Innenkanals (6) höher als ein festgelegter Druckgrenzwert ist.

6. Relais-Verbindungsvorrichtung (3) nach einem der Ansprüche 1 bis 5 für eine Relais-Zwangsbelüftungsanlage (1), deren Leitungsabschnitte (7) zylindrisch sind, **dadurch gekennzeichnet, dass** die Rohreinheit (6) einen zentralen Teil (12a) mit quadratischem Querschnitt umfasst, ab einer ersten Seite desselben sich ein erster allgemein zylindrischer Endabschnitt (13) erstreckt, dessen Ende mit den Befestigungsmitteln (13c) ausgestattet ist, die für einen dichten Anschluss an einen Leitungsabschnitt (7) konfiguriert sind, der mit einem Relais-Lüfter (8) ausgestattet ist, und ab einer zweiten Seite desselben sich ein zweiter Endabschnitt (14) erstreckt, beispielsweise indem er sich erweitert, indem er allgemein einem Kegelstumpf folgt, bis zu einer zylindrischen Endregion (14a), die mit den Befestigungsmitteln (14c) ausgestattet ist, die für einen dichten Anschluss am Ende eines Leitungsabschnitts (7) konfiguriert sind.

7. Relais-Verbindungssystem (2) für eine Relais-Zwangsbelüftungsanlage (1), umfassend eine in eine Reihe von Leitungsabschnitten (7), gebildet von Mäntel, unterteilte Leitung, wobei zwei aufeinanderfolgende Leitungsabschnitte (7) voneinander beabstandet sind, und wobei ein Lüfter, bezeichnet als primär, am Anfang des ersten Leitungsabschnitts (7) der Reihe vorgesehen ist, und ein Lüfter, bezeichnet als Relais (8), dessen Geschwindigkeit in Echtzeit einstellbar ist, am Anfang jedes Leitungsabschnitts (7) ab dem zweiten der Reihe vorgesehen ist, beabstandet vom Ende des vorangehenden Leitungsabschnitts (7), **dadurch gekennzeichnet, dass** es für den oder jeden Relais-Lüfter (8) eine Relais-Verbindungsvorrichtung (3) nach einem der Ansprüche 1 bis 6 umfasst, und eine Automatik (4), die konfiguriert ist, um Luftströmungsbedingungen am Ende des vorgelagerten Leitungsabschnitts (7) zu bestimmen, mit dem die Relais-Verbindungsvorrichtung (3) bestimmt ist, verbunden zu sein, auf der Basis von Messungen, die von den Messmitteln (9) durchgeführt wurden und um in Echtzeit über einen Geschwindigkeitsregler (5) die Geschwindigkeit des Relais-Lüfters (8) zu steuern, um am Ende des vorgelagerten Leitungsabschnitts (7) gewünschte Strömungsbedingungen zu erhalten.

8. Relais-Verbindungssystem (2) nach Anspruch 7, umfassend eine Relais-Verbindungsvorrichtung (3), deren Messmittel (9) zum einen Messmittel des statischen Drucks der Luft im Inneren des Innenkanals (6c) der Rohreinheit (6) und zum anderen des atmosphärischen Drucks außerhalb der Rohreinheit (6) sind, **dadurch gekennzeichnet, dass** die Automatik (4) konfiguriert ist, damit der statische Druck am Ende des vorgelagerten Leitungsabschnitts (7) des Relais-Lüfters (8) bei einem Zielwert ist, insbesondere bei einem Zielwert von 0 Pa oder leicht über 0 Pa.

9. Zwangsbelüftungsanlage (1), umfassend eine in eine Reihe von Leitungsabschnitten (7), gebildet von Mäntel, unterteilte Leitung, wobei zwei aufeinanderfolgende Leitungsabschnitte (7) voneinander beabstandet sind, und wobei ein Lüfter, bezeichnet als primär, am Anfang des ersten Leitungsabschnitts (7) der Reihe vorgesehen ist, und ein Lüfter (8), bezeichnet als Relais, dessen Geschwindigkeit in Echtzeit einstellbar ist, am Anfang jedes Leitungsabschnitts (7) ab dem zweiten der Reihe vorgesehen ist, beabstandet vom Ende des vorangehenden Leitungsabschnitts (7), **dadurch gekennzeichnet, dass** sie zwischen zwei aufeinanderfolgenden Leitungsabschnitten (7) mit einem Relais-Verbindungssystem (2) nach einem der Ansprüche 7 und 8 ausgestattet ist, dessen Relais-Verbindungsvorrichtung (3) dicht zwischen den zwei aufeinanderfolgenden Leitungsabschnitten (7) angeschlossen ist.

## Claims

1. A relay connection device (3) for a relay forced ventilation system (1) comprising a line divided into a series of line sections (7) formed by ventilating ducts, two successive line sections (7) being spaced from each other, in which ventilation system a so-called primary fan is provided at the beginning of the first line section (7) of said series, and a so-called relay fan (8) is provided at the beginning of each line section (7) from the second section of said series, at a distance from the end of the previous line section (7), the relay connection device (3) comprising a duct assembly (6) forming an inner channel (6c) both ends (6a, 6b) of which are open and provided with fixing means (13c, 14c) configured to provide a leak-proof connection between two line sections (7) so as to put a so-called upstream line section (7) in fluidic communication with the relay fan (8) of the next line section (7), the relay connection device (1) being **characterised in that** the duct assembly (6) is further provided with measuring means (9) for measuring at least one parameter of the air flow inside said line, in order to control the operation of said relay fan (8), whose speed is adjustable in real time, to achieve desired flow conditions at the end of the upstream line section (7).

2. The relay connection device (3) according to claim 1, **characterized in that** said measuring means (9) are means for measuring, on one hand, the static pressure of the air inside the inner channel (6c) of the duct assembly (6) and, on the other hand, the atmospheric pressure outside the duct assembly (6).

3. The relay connection device (3) according to claim 2, **characterized in that** said measuring means (9) comprise a differential pressure sensor (9a) whose first terminal is connected to measuring components for measuring static pressure in the inner channel (6c) of the duct assembly (6) and whose other terminal is in ambient air, preferably at the same altitude as the axis of the inner channel (6c), in order to measure the atmospheric pressure, said measuring components preferably consisting in at least four pressure tappings connected in parallel to the first terminal of the differential pressure sensor (9a).

4. The relay connection device (3) according to one of claims 1 to 3, **characterized in that** the duct assembly (6) is provided with at least one vacuum relief valve (10) configured to put the inner channel (6c) of the duct assembly (6) in communication with the outside air when the pressure inside the inner channel (6c) is lower than a defined pressure threshold.

5. The relay connection device (3) according to one of claims 1 to 4, **characterized in that** the duct assembly (6) is provided with at least one pressure-relief valve (11) configured to put the inner channel (6c) of the duct assembly (6) in communication with the outside air when the pressure inside the inner channel (6c) is higher than a defined pressure threshold.

6. The relay connection device (3) according to one of claims 1 to 5, for a relay forced ventilation system (1) whose line sections (7) are cylindrical, **characterized in that** the duct assembly (6) comprises a middle part (12a) with a square cross section, from a first side of which extends a generally cylindrical first end part (13) whose end is provided with said fixing means (13c), which are configured to provide a leak-proof connection to a line section (7) provided with a relay fan (8), and from a second side of which a second end part (14) extends, for example with widening generally as a truncated cone, to a cylindrical end region (14a) provided with said fixing means (14c), which are configured to provide a leak-proof connection to the end of a line section (7).

7. A relay connection system (2) for a relay forced ventilation system (1) comprising a line divided into a series of line sections (7) formed by ventilating ducts, two successive line sections (7) being spaced from each other, in which ventilation system a so-called primary fan is provided at the beginning of the first line section (7) of said series, and a so-called relay fan (8), whose speed is adjustable in real time, is provided at the beginning of each line section (7) from the second section of said series, at a distance from the end of the previous line section (7), **characterized in that** it comprises, for the or each relay fan (8), a relay connection device (3) as defined in one of claims 1 to 6, and an automatic control unit (4) configured to determine, from the measurements took by the measuring means (9), air flow conditions at the end of the upstream line section (7) to which the relay connection device (3) is intended to be connected, and to control in real time, via a speed controller (5), the speed of the relay fan (8) in order to achieve desired flow conditions at the end of the upstream line section (7).

8. The relay connection system (2) according to claim 7, comprising a relay connection device (3) whose measuring means (9) are means for measuring, on one hand, the static pressure of the air inside the inner channel (6c) of the duct assembly (6) and, on the other hand, the atmospheric pressure outside the duct assembly (6), **characterized in that** the automatic control unit (4) is configured so that the static pressure at the end of the upstream line section (7), which is upstream of the relay fan (8), is equal to a target value, namely a target value of 0 Pa or slightly higher than 0 Pa.

9. A forced ventilation system (1) comprising a line divided into a series of line sections (7) formed by ventilating ducts, two successive line sections (7) being spaced from each other, in which ventilation system a so-called primary fan is provided at the beginning of the first line section (7) of said series, and a so-called relay fan (8), whose speed is adjustable in real time, is provided at the beginning of each line section (7) from the second section of said series, at a distance from the end of the previous line section (7), **characterized in that** it is equipped, between two successive line sections (7), with a relay connection system (2) as defined in one of claims 7 and 8, whose relay connection device (3) is leak-proof connected between said two successive line sections (7).
